# EUROPEAN PATENT SPECIFICATION

(11) **EP 0 584 829 B1**
(45) Date of publication and mention of the grant of the patent: **08.05.2002**
(21) Application number: 93113695.6
(22) Date of filing: 26.08.1993
(51) Int. Cl.: B60T 8/34

(54) **Vehicle antilock brake control system**
Blockierschutz-Bremssystem für Fahrzeuge
Système de freinage à anti-blocage pour véhicules

(30) Priority: 27.08.1992 JP 27224192
(43) Date of publication of application: 02.03.1994
(73) Proprietor: JAPAN ELECTRONICS INDUSTRY, LTD., Ikuno-ku Osaka (JP)
(72) Inventor: Miyazaki, Nagao, Osaka (JP)
(74) Representative: Strehl Schübel-Hopf & Partner

(56) References cited:
- EP-A- 0 025 714
- EP-A- 0 467 112
- GB-A- 1 359 487
- GB-A- 2 168 445
- US-A- 3 724 914
- US-A- 3 980 350

## Description

### BACKGROUND OF THE INVENTION

The present invention relates to an antilock brake control system (ABS) of large-size vehicles which insures safe steering without locking of the wheels even when a brake force is suddenly applied.

There has been a mounting interest in the antilock brake system which controls the brake fluid pressure on the wheel within a certain range (about 20%) of slip ratio between braking force and cornering force on sudden braking, and an increasing number of vehicles are equipped with such ABS systems for safe steering in the event of sudden braking.

Providing an antilock brake system for each wheel of a vehicle is known from GB-A-1 359 487, US-A-3,980,350, US-A-3,724,914 and EP-A-0 467 112. Such a system generally comprises a control unit including a stress sensor for detecting stress of an associated wheel, a controller for providing an actuating signal in response to the output signal from the stress sensor, and an actuator for adjusting the brake fluid pressure applied to the associated wheel in response to the actuating signal. Among the known modes of ABS control are the three-system control (selectro-control) mode in which the brake fluid pressures to the front right and left wheels are independently controlled and, with one of the two rear wheels which is more liable to be locked as a reference, the brake fluid pressures to act on both rear wheels are controlled as a unit, the two-system control mode in which the front and rear wheels are respectively controlled as units or the diagonally located wheels are simultaneously controlled, or the simultaneous front and rear wheel control mode in which one of the rear wheels is controlled by the selectro-control method and with one of the front wheels which is harder to control as a reference, the brake fluid pressures to the two front wheels are simultaneously controlled.

Since the conventional antilock brake system described above uses one controller for controlling the brake fluid pressures to the four wheels either through three-system control or through two-system control, a long pipeline is required between the wheel cylinder of each wheel and the actuator but particularly in the case of a large-sized vehicle such as a trailer or a large bus, which has a great overall length, the brake fluid pipeline has to span a great distance, with the result that not only a time lag is inevitable after the actuator receives a drive command and before the wheel cylinder of the wheel is supplied with a brake fluid pressure but also a transmission loss of the brake fluid pressure is liable to occur, so that the system cannot provide for exact brake control and, hence, cannot be said to be a fully safe antilock brake control system.

To overcome the above problems, EP-A-0 025 714 suggests a vehicle braking system including a pump to charge a pressure accumulator from a fluid reservoir, an electro-mechanical servo valve to control the supply of pressure from the accumulator to a brake actuator in response to a signal of an electric control unit which is fed with a transducer signal which varies as a function of brake pedal displacement. The system further includes a wheel speed sensor delivering an output signal to the electric control unit, the sensor output being indicative of a wheel locking during braking. The entire braking system is contained within the brake actuator; thus, no connection to other parts of the vehicle is necessary apart from the electric wiring to the transducer of the brake pedal. Each brake actuator constitutes an independent braking system for each wheel.

Furthermore, in order to improve the sensor system in a vehicle antilock brake system, EP-A-0 363 570 proposes to supply various sensor signals to the control means for controlling the brake fluid pressure. The brake system comprises a brake pedal depressing force sensor, a chassis speed sensor, a brake fluid pressure sensor and a road surface friction coefficient detector. The road surface friction coefficient is calculated from the road surface frictional force value and the vertical load value, both values are obtained from values of tire strain or axle strain measured by means of strain gauges.

In large-size vehicles with many wheels, such as trailers or a busses, the known ABS control systems are not sufficiently fast and accurate.

Individual control of each wheel requires a large number of control units possibly with individual pressure fluid supply units (as suggested in EP-A-0 025 714). In a vehicle with many wheels, such systems would be cumbersome, cost-intensive and liable to failure.

### SUMMARY OF THE INVENTION

The above drawbacks are overcome by the antilock brake control system defined in claim 1.

By controlling two wheels disposed diagonally on two adjacent axles with a common control unit, high stability during braking is achieved. At the same time, the number of components is reduced as compared with known individual ABS control systems. Since connecting lines for brake fluid extend across the diagonal distance of the adjacent axles, no substantial break fluid pressure loss or time lag occurs in case of sudden braking.

Preferred embodiments are set forth in the claims 2 to 6.

### BRIEF DESCRIPTION OF THE DRAWINGS

Fig. 1 is a basic hardware block diagram illustrating a vehicle ABS control system individually controlling each wheel of a passenger car not being part of the invention;
Fig. 2 is a hardware block diagram illustrating a vehicle antilock system control device applied to a large-size bus, the device not being part of the invention;
Fig. 3 is a hardware block diagram illustrating an embodiment of the invention in which the vehicle antilock brake system control device of the invention is applied to a trailer;
Fig. 4 is hardware block diagram illustrating part of the vehicle antilock brake system control device;
Fig. 5 is a circuit diagram showing an example of a stress sensor system.

### DETAILLED DESCRIPTION OF PREFERRED EMBODIMENTS

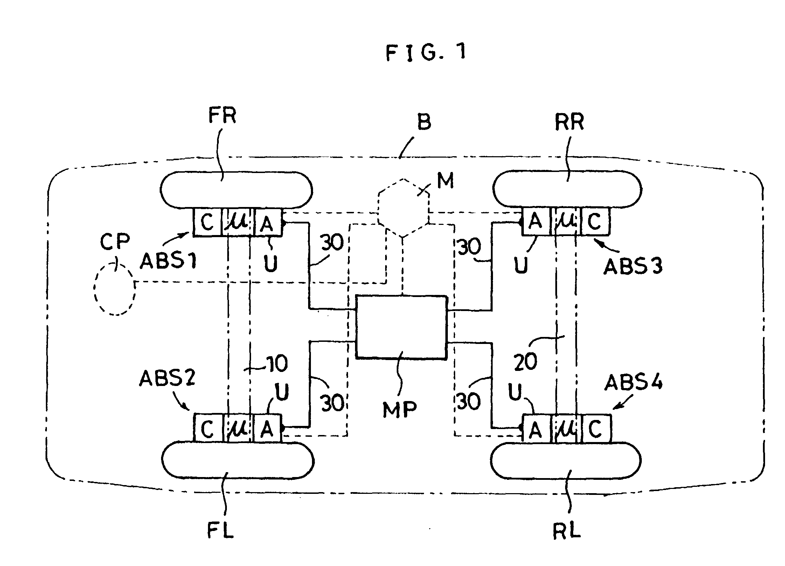

Referring to Fig. 1, this vehicle ABS control system comprises four control units U each consisting of three elements, namely a stress sensor µ for detecting the road surface friction force or road surface friction coefficient, a controller C and an actuator A, as respectively mounted on the front axle 10 and rear axle 20 of a vehicle B in correspondence with the front right wheel FR, front left wheel FL, rear right wheel RR and rear left wheel RL thereof in such a manner that they may independently detect the stress values, such as road surface friction force or road surface friction coefficient values, for the corresponding wheels to thereby allow the respective wheels to be controlled independently of the others, said actuator A of each control unit U being connected to a master cylinder MP of a foot brake through a brake fluid line 30 so as to constitute antilock brake systems ABS1, ABS2, ABS3 and ABS4 for independent control of the respective wheels.

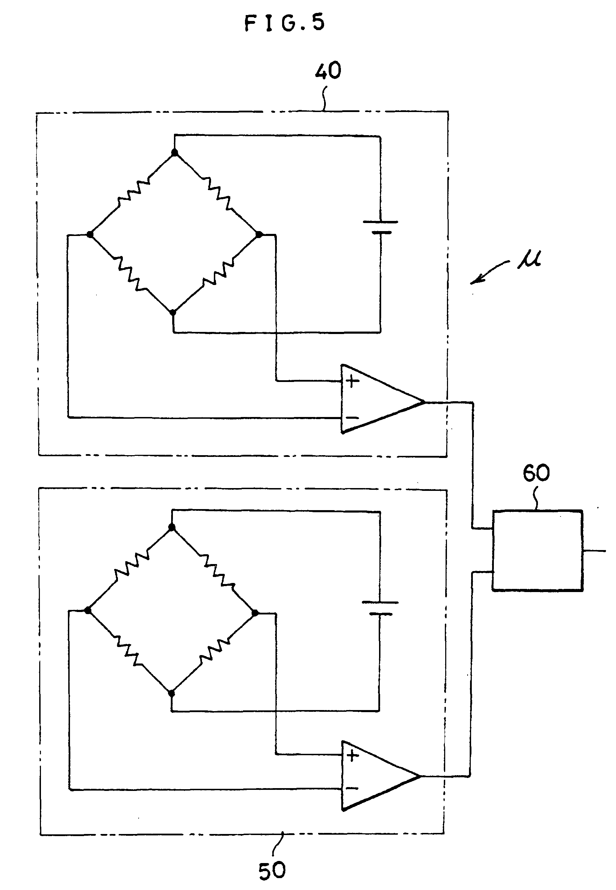

The stress sensor µ is the road surface friction coefficient detector which the present applicant has previously disclosed in JP-A-4 331 336 published after the priority date or in EP-A-0 363 570. Thus, the road surface coefficient detector comprises a road surface friction force sensor 40 consisting of 4 strain gauges affixed on both sides of a plastic, silicon or metal wafer in a perpendicular arrangement to form a bridge and installed in a hole provided in the axle or any member close to the axle, with the output terminal of said bridge being connected to an amplifier so as to detect the road surface friction force and a vertical load sensor 50, constructed in the same manner as above, for detecting the vertical reaction load. As shown in Fig. 5, these two sensors 40 and 50 are connected to an operation circuit 60 to output a road surface friction coefficient. The controller C is a microcomputer or an LSI electronic controller and the actuator A is driven by a hydraulic pump.

The stress sensor µ need not be the above-mentioned detector utilizing strain gauges but may for example be a semiconductor sensor, shear stress sensor, acceleration sensor, chassis speed sensor, wheel speed sensor or the like.

The control unit U need not be an integral assembly of said stress sensor µ, controller C and actuator A but these components may be disposed near the wheel or axle independently but operatively associated with one another so that they may function in the optimum manner to provide for necessary control according to wheel stress detection signals.

As the driver applies a sudden brake on his running car, the stress sensors µ of the respective control units U independently detect stresses, such as current road surface friction forces or road surface friction coefficients, and independently transmit detection signals to the corresponding controllers C which are adapted to output drive commands to the corresponding actuators A. The respective actuators A receiving said drive commands from said controllers C according to the detection signals for the respective wheels are driven independently so that an antilock brake may be applied independently for each wheel. As indicated by broken lines in Fig. 1, a central controller M providing for a failsafe telemetering monitor of the ABS control status of each wheel and a coordination of the respective wheel actions controls the operation of the respective control units U so that the actions of the antilock brakes for the wheels can be efficiently coordinated. As shown, CP represents a control panel.

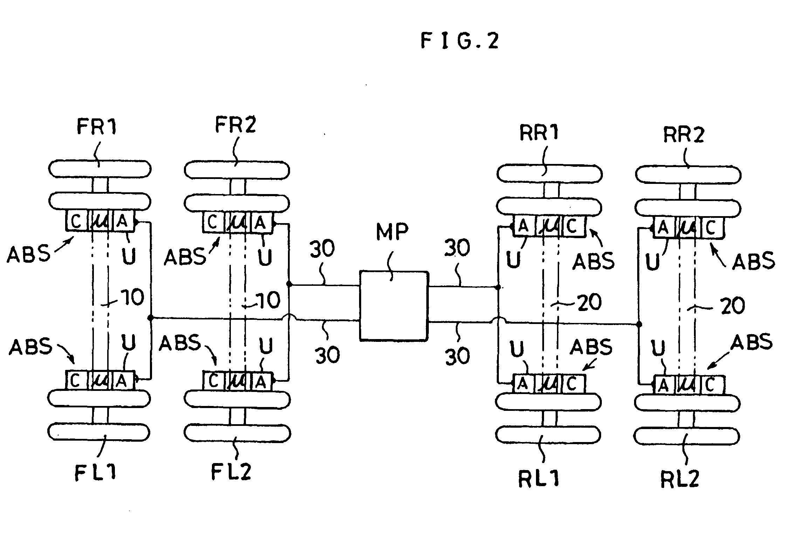

Fig. 2 shows an embodiment in which an ABS control system is mounted on a large-sized bus of the two-front axle/8-wheel and two-rear axle/8-wheel type. The above-mentioned control unit U is provided for each of the front axles 10,10 and rear axles 20,20 so that the respective control units U may independently detect stress values, such as road surface friction force or road surface friction coefficient values, for the front right wheels FR1,FR2, front left wheels FL2,FL2, and rear right wheels RR2,RR2 and rear left wheels RL1,RL2 mounted on the front axles 10,10 and rear axles 20,20, and actuators A of these control units U are supplied with a brake fluid from a master cylinder MP.

In this manner, the bus is equipped with 8 independently acting antilock brake systems in a total of 8 positions, namely 4 positions, right and left, for the front wheels and 4 positions, right and left, for the rear wheels, so that the respective actuators A receiving drive commands from the corresponding controllers according to detected stress values, such as road surface friction force or road surface friction coefficient values, for the respective wheels may adjust the brake fluid pressures independently, with the result that the antilock brakes for respective wheels can be independently actuated without requiring extended brake fluid lines.

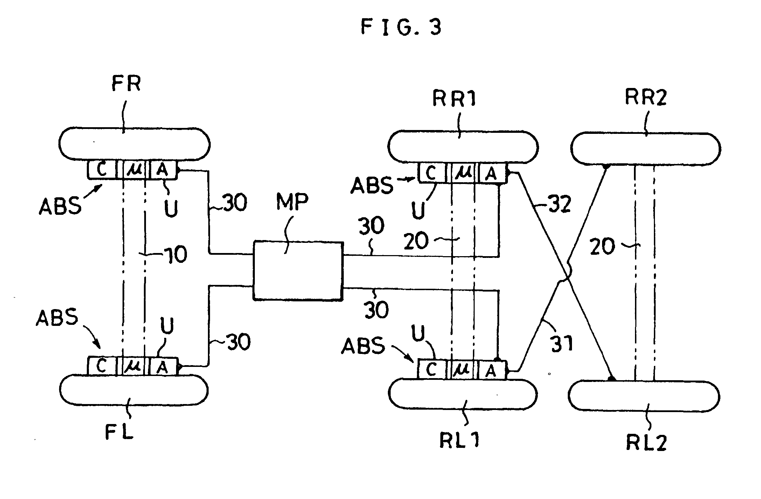

Fig. 3 shows an embodiment in which the ABS control system of the invention is applied to a trailer of the front 1-axle/2-wheel, rear two-axle/4-wheel diagonal two-wheel simultaneous control type. Here, the independently acting control unit U is provided in a total of 4 positions, namely 2 positions, right and left, for the front wheels and 2 positions, right and left, for the four rear wheels, with the rear right wheel RR2 being connected to the control unit U for the rear left wheel RL1 through a connecting pipe 31 and the rear left wheel RL2 to the control unit U for the rear right wheel RR1 through a connecting pipe 32, and the actuators A of these four control units U are respectively supplied with a brake fluid from the master cylinder MP.

The trailer is, thus, equipped with independently acting antilock brake systems ABS in two positions, right and left, for the front wheels and two positions, right and left, for the four rear wheels, with the respective actuators A of said control units receiving drive commands from the corresponding controllers C according to detected stress values, such as road surface friction force or road surface friction coefficient values, for each front wheel and for each couple of rear wheels, couples being driven to adjust the brake fluid pressures acting on the respective wheels independently so that antilock brakes can be applied for sudden stopping without regard to chassis length or axle-to-axle distance for each front wheel and for each couple of rear wheels independently.

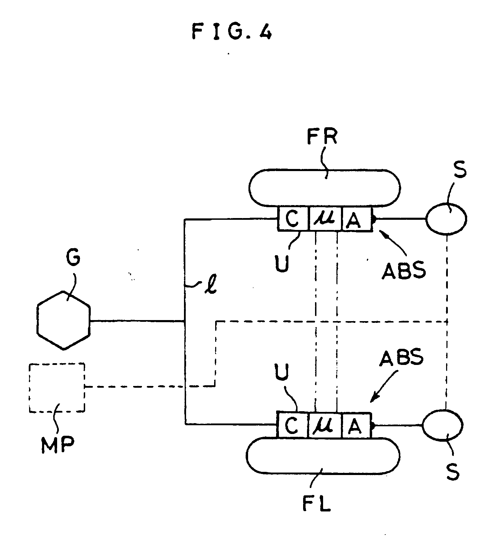

In the above embodiment, the actuator A of each control unit is supplied with a brake fluid from the master cylinder MP through a brake fluid line 30 and, therefore, complexity is introduced by the routing of the fluid line 30. However, when a control hydraulic pressure source S comprising a high-pressure control hydraulic pressure generating means, a fluid reservoir means and a reversing means is disposed for each control unit U as shown in Fig. 4, the brake fluid line 30 can be dispensed with and an antilock brake system having its own control hydraulic pressure source can be independently provided for each wheel or each set of wheels. Moreover, when a foot brake master cylinder MP is additionally provided as indicated by broken lines in Fig. 4 so as to make up for deficiencies in brake fluid pressure in the control hydraulic pressure sources S, the actuators of the respective control units can be driven at exact fluid pressures for precision control. In Fig. 4, the letter G represents a signal transmission system and l represents its signal line.

While the above embodiments have been described with reference to hydraulic oil brake control, the present invention is not limited to such hydraulic oil control but can be applied to pneumatic brake control with equal success.

## Claims

1. An antilock brake control system of a large-size vehicle having two adjacent axles (20), the control system comprising two control units (U) each installed close to one wheel (RL1, RR1) on the front one of said adjacent axles (20) and including
a stress sensor (µ) for detecting stress of the associated wheel (RL1, RR1),
a controller (C) for providing an actuating signal in response to the output signal from the stress sensor (µ), and
an actuator (A) for adjusting the brake fluid pressure applied to the associated wheel (RL1, RR1) in response to the actuating signal,
**characterised in that** the actuator (A) of each control unit (U) adjusts the brake fluid pressure also of the diagonally opposite wheel (RR2, RL2) on the rear one of said adjacent axles (20).

2. The control system of claim 1, wherein each control unit (U) is supplied with a break fluid pressure from a foot brake master cylinder (MP).

3. The control system of claim 1, wherein each control unit (U) is provided with a control pressure source (S) comprising a high-pressure control pressure generating means, a fluid reservoir means and a reversing means.

4. The control system of claim 3, wherein said control pressure source (S) is supplied with auxiliary oil pressure from said foot brake master cylinder (MP) to compensate deficiencies in control pressure in the control pressure generating means.

5. The control system of claim 4 wherein a signal transmission system (G) is coupled to each actuator controller (C) by signal lines (l).

6. The control system of claim 1, wherein said stress sensor (µ) is a road surface friction coefficient detector utilising a road surface friction force sensor (40) and a vertical load sensor (50), each of said sensors comprising strain gauges for detecting the road surface friction force and the vertical reaction load respectively.

## Patentansprüche

1. Antiblockier-Bremssteuersystem eines Großfahrzeugs mit zwei benachbarten Achsen (20), wobei das Steuersystem zwei Steuereinheiten (U) enthält, deren jede nahe einem Rad (RL1, RR1) an der vorderen der beiden benachbarten Achsen (20) eingebaut ist und aufweist:
einen Spannungssensor (µ) zum Erfassen von Spannung an dem zugehörigen Rad (RL1, RR1),
eine Steuerung (C) zur Ausgabe eines Betätigungssignals entsprechend dem Ausgangssignal des Spannungssensors (µ), und
ein Stellglied (A) zum Einstellen des dem zugehörigen Rad (RL1, RR1) zugeführten Bremsfluiddrucks entsprechend dem Betätigungssignal,
**dadurch gekennzeichnet, daß** das Stellglied (A) jeder Steuereinheit (U) den Bremsfluiddruck auch des diagonal gegenüberliegenden Rades (RR2, RL2) an der hinteren der benachbarten Achsen (20) einstellt.

2. Steuersystem nach Anspruch 1, wobei jede Steuereinheit (U) von einem Fußbrems-Hauptzylinder (MP) mit Bremsfluiddruck versorgt wird.

3. Steuersystem nach Anspruch 1, wobei jede Steuereinheit (U) mit einer Steuerdruckquelle (S) versehen ist, die einen Hochdruck-Steuerdruckerzeuger, eine Fluidbehältereinrichtung und eine Umsteuereinrichtung aufweist.

4. Steuersystem nach Anspruch 3, wobei die Steuerdruckquelle (S) von dem Fußbrems-Hauptzylinder (MP) mit Hilfsöldruck versorgt wird, um Steuerdruckmängel in dem Steuerdruckerzeuger zu kompensieren.

5. Steuersystem nach Anspruch 4, wobei ein Signalübertragungssystem (G) über Signalleitungen (1) mit jeder Stellgliedsteuerung (C) gekoppelt ist.

6. Steuersystem nach Anspruch 1, wobei der Spannungssensor (µ) ein Detektor für den Straßenoberflächen-Reibungskoeffizient ist, der mit einem Straßenoberflächen-Reibkraftsensor (40) und einem Vertikallastsensor (50) arbeitet, wobei jeder dieser Sensoren Dehnungsmesser zum Erfassen der Straßenoberflächen-Reibkraft bzw. der Vertikal-Reaktionslast aufweist.

## Revendications

1. Système de commande à anti-blocage d'un véhicule de grandes dimensions ayant deux essieux adjacents (20), le système de commande comprenant deux dispositifs de commande (U) installés chacun près d'une roue (RL1, RR1) sur l'essieu avant desdits essieux adjacents et comportant
un capteur (µ) de contraintes pour détecter des contraintes de la roue correspondante (RL1, RR1),
un moyen de commande (C) pour produire un signal d'actionnement en réponse au signal de sortie du capteur (µ) de contraintes, et
un actionneur (A) pour régler la pression de liquide de frein appliquée à la roue correspondante (RL1, RR1) en réponse au signal d'actionnement,
**caractérisé en ce que** l'actionneur (A) de chaque dispositif de commande (U) règle également la pression de liquide de frein de la roue opposée en diagonale (RR2, RL2) sur l'essieu arrière desdits essieux adjacents (20).

2. Système de commande selon la revendication 1, dans lequel chaque dispositif de commande (U) est alimenté en liquide de frein sous pression par un maître-cylindre (MP) de commande au pied.

3. Système de commande selon la revendication 1, dans lequel chaque dispositif de commande (U) est muni d'une source (S) de pression de commande comportant un moyen générant une pression de commande haute-pression, un moyen formant réservoir de liquide et un moyen d'inversion.

4. Système de commande selon la revendication 3, dans lequel ladite source (S) de pression de commande est alimentée en huile auxiliaire sous pression par ledit maître-cylindre (MP) de commande au pied pour compenser les manques de pression de commande dans le moyen générant une pression de commande.

5. Système de commande selon la revendication 4, dans lequel un système (G) de transmission de signaux est couplé à chaque moyen de commande (C) d'actionneur par des lignes (1) de signaux.

6. Système de commande selon la revendication 1, dans lequel ledit capteur (µ) de contraintes est un capteur de coefficient de frottement de la surface de la chaussée utilisant un capteur (40) de force de frottement de la surface de la chaussée et un capteur (50) de charge verticale, chacun desdits capteurs comportant des jauges de contraintes pour détecter respectivement la force de frottement de la surface de la chaussée et la charge verticale de réaction.
